# EUROPÄISCHE PATENTANMELDUNG

(11) **EP 0 566 840 A1**
(43) Veröffentlichungstag der Anmeldung: **27.10.1993**
(21) Anmeldenummer: 93102602.5
(22) Anmeldetag: 19.02.1993
(51) Int. Cl.: B60K 1/04, B60K 5/00, B60R 21/00

(54) **Kraftfahrzeug, insbesondere Personenkraftwagen**

(30) Priorität: 18.04.1992 DE 4212957
(71) Anmelder: Volkswagen Aktiengesellschaft, D-38436 Wolfsburg (DE)
(72) Erfinder: Bufler, Ernst, Dipl.-Ing., W-3180 Wolfsburg (DE); Kazma, Musallam, Dipl.-Ing., W-3180 Wolfsburg 12 (DE)

(57) **Zusammenfassung**

Die Erfindung betrifft ein Kraftfahrzeug, insbesondere einen Personenkraftwagen, mit einem den Fahrgastraum umfassenden deformationsstabilen mittleren Fahrzeugbereich (1), einem definiert längsdeformierbaren vorderen Fahrzeugbereich (2) und einem ebenfalls definiert längsdeformierbaren hinteren Fahrzeugbereich (3) sowie mit einer im hinteren Fahrzeugbereich konzentrierten großen Masse (4), wie z. B. einem Antriebsaggregat eines heckgetriebenen Fahrzeugs oder einem Batterieblock eines zumindest zeitweise elektromotorisch betriebenen Fahrzeugs. Um die Vorderwagenbelastung bei einem Frontalzusammenstoß herabzusetzen und den Aufwand für die in diesem Fahrzeugbereich angeordneten Deformationsglieder (12) zu senken, ist die im Heckbereich angeordnete große Masse (4) einerseits am im wesentlichen formstabilen Heckende (5) des hinteren Fahrzeugbereichs oder Teilen davon befestigt und andererseits relativ zu den übrigen Teilen des Fahrzeugs in Fahrzeuglängsrichtung nachgiebig gelagert. Auf diese Weise wird ein Teil der bei einem Frontalzusammenstoß auftretenden Aufprallenergie unter Entlastung der vorderen Deformationsglieder 12 in den längsverformbaren Deformationsgliedern 13 des hinteren Fahrzeugbereichs in Verformungsarbeit umgesetzt.

## Beschreibung

Die Erfindung betrifft ein Kraftfahrzeug, insbesondere einen Personenkraftwagen der im Oberbegriff des Patentanspruchs 1 genannten Art.

Moderne Kraftfahrzeuge, insbesondere Personenkraftwagen besitzen einen den Fahrgastraum umfassenden weitgehend deformationsstabilen mittleren Fahrzeugbereich sowie je einen definiert längsverformbaren vorderen und hinteren Fahrzeugbereich.

Diese Fahrzeugkonzeption dient dem Schutz der Fahrzeuginsassen sowohl bei einem Frontalzusammenstoß des Fahrzeugs als auch bei einem Heckaufprall. In beiden Fällen wird die Aufprallenergie dabei durch den sich gezielt verformenden Vorderwagen bzw. Hinterwagen im wesentlichen in Verformungsenergie umgewandelt.

Bis zu einem bestimmten Geschwindigkeitsniveau können auf diese Weise die im weitgehend deformationsstabilen mittleren Fahrzeugbereich befindlichen und angeschnallten Fahrzeuginsassen vor schwerwiegenden Verletzungen geschützt werden.

Die Aufprall- oder Stoßenergie wird im wesentlichen dadurch verzehrt, daß im Vorder- bzw. Hinterwagen befindliche Längsträger derart ausgebildet und bemessen sind, daß sie sich in Längsrichtung gezielt stauchen und falten lassen, ohne daß es zu einem unkontrollierten Einknicken dieser Längsträger kommt.

Um einen optimalen Insassenschutz zu erzielen, muß dem Vorderwie dem Hinterwagen des Fahrzeugs gezielt ein bestimmtes Verformungsverhalten, d. h. ein bestimmter Verformungsablauf gegeben werden, wozu u. a. auch ein bestimmter Verformungsweg erforderlich ist.

Ein optimaler Insassenschutz ließe sich im Prinzip am einfachsten erreichen, wenn im Vorder- wie im Hinterwagen jeweils vergleichsweise große Verformungswege zur Verfügung gestellt werden würden. Ein solches Vorgehen würde jedoch im Widerspruch stehen zum zunehmenden Bestreben, möglichst kompakte, d. h. möglichst wenig Bauraum sowie möglichst wenig Verkehrsfläche beanspruchende Fahrzeuge zu bauen.

Vor diesem Hintergrund liegt der Erfindung die Aufgabe zugrunde, ein Kraftfahrzeug der im Oberbegriff des Patentanspruchs 1 genannten Art derart auszubilden, daß einerseits ein gewohnt guter Insassenschutz sowohl bei einem Frontalzusammenstoß als auch bei einem Heckaufprall gewährleistet ist, andererseits aber trotzdem eine vergleichsweise kurze Baulänge für das Fahrzeug realisiert werden kann.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß ist also die im hinteren Fahrzeugbereich angeordnete konzentrierte große Masse nicht in sonst allgemein üblicher Weise starr mit dem Fahrzeug verbunden, sondern einerseits nur am im wesentlichen formstabilen Heckende des hinteren Fahrzeugbereichs oder Teilen davon befestigt und andererseits aber relativ zu den übrigen Teilen des Fahrzeugs in Fahrzeuglängsrichtung nachgiebig gelagert.

Durch diese Ausbildung des Fahrzeugs wird erreicht, daß die Deformationsglieder des längsdeformierbaren vorderen Fahrzeugbereichs bei einem Frontalzusammenstoß weniger Verformungsarbeit als sonst üblich leisten müssen und damit kleiner, insbesondere kürzer bemessen werden können als bei konventionell ausgebildeten Fahrzeugen. Ein Teil der Aufprallenergie, nämlich der auf die im hinteren Fahrzeugbereich angeordnete große Masse entfallende Teil, wird dabei nämlich zumindest teilweise in den Deformationsgliedern des längsdeformierbaren hinteren Fahrzeugbereichs in Verformungsarbeit umgewandelt.

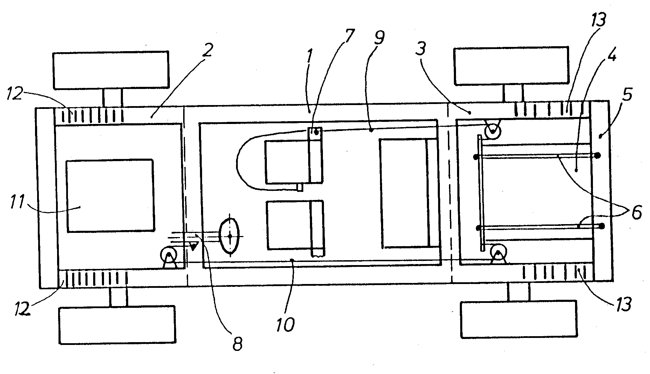

Anhand eines in der Zeichnung dargestellten prinzipienhaften Ausführungsbeispiels wird die Erfindung nachstehend naher erläutert.

Die einzige Figur der Zeichnung zeigt in einer schematisierten Draufsicht einen Personenkraftwagen mit einem den Fahrgastraum umfassenden deformationsstabilen mittleren Fahrzeugbereich 1, einem definiert längsdeformierbaren vorderen Fahrzeugbereich 2 und einem definiert längsdeformierbaren hinteren Fahrzeugbereich 3.

Die definierte Längsdeformierbarkeit des Vorderwagens sowie des Hinterwagens wird in üblicher Weise durch im Vorderwagen bzw. im Hinterwagen vorgesehene Deformationsglieder realisiert, die in der Figur durch längsverformbare Längsträgerbereiche 12 und 13 angedeutet sind.

Im dargestellten Ausführungsbeispiel ist ein Personenkraftwagen o. ä. gezeigt, der zumindest zeitweise elektromotorisch angetrieben werden soll, wie dies z. B. bei bekannten Hybrid-Fahrzeugen der Fall ist, die für ihren Antrieb nach Bedarf entweder eine konventionelle Brennkraftmaschine oder eine Elektromaschine aktivieren.

Derartige Hybrid-Fahrzeuge benötigen im allgemeinen einen sehr großen Batterieblock hohen Gewichts, der üblicherweise im hinteren Fahrzeugbereich untergebracht ist. Im dargestellten Ausführungsbeispiel ist ein solcher eine konzentrierte große Masse darstellender Batterieblock mit 4 angedeutet.

Erfindungsgemäß ist dieser große Batterieblock 4 nicht in üblicher Weise starr mit dem Fahrzeug, d. h. insbesondere mit dem Fahrzeugboden verbunden, sondern einerseits am im wesentlichen formstabilen Heckende 5, das üblicherweise durch einen formsteifen Querträger gebildet wird, befestigt und andererseits aber relativ zu den übrigen Teilen des Fahrzeugs in Fahrzeuglängsrichtung nachgiebig gelagert.

Es ist leicht erkennbar, daß bei einem Frontalzusammenstoß des Fahrzeugs nicht wie sonst allgemein üblich nur die im vorderen Fahrzeugbereich 2 vorgesehenen längsverformbaren Deformationsglieder 12, sondern auch die im hinteren Fahrzeugbereich 3 angeordneten längsverformbaren Deformationsglieder 13 zum Verzehr der Aufprallenergie herangezogen werden, indem sie Verformungsarbeit leisten.

Die nur am formstabilen Heckende 5 befestigte, ansonsten aber längsnachgiebig gelagerte große Masse des Batteriekastens 4 stützt sich hierbei in Fahrzeuglängsrichtung über die längsverformbaren Deformationsglieder 13 ab, so daß zunächst zumindest ein Teil ihrer kinetischen Energie in diesen Deformationsgliedern in Verformungsarbeit umgesetzt wird. Auf diese Weise wird der auf die große Masse des Batteriekastens 4 zurückgehende Teil der bei einem Frontalzusammenstoß auf die längsverformbaren Deformationsglieder 12 des Vorderwagens einwirkenden dynamischen Abstützkraft entsprechend verringert, so daß diese Deformationsglieder entlastet und entsprechend kleiner dimensioniert werden können.

Die Befestigung des Batteriekastens 4 am formstabilen Heckende 5 kann grundsätzlich starr erfolgen. In vorteilhafter Weise ist es aber auch möglich, die große Masse des Batteriekastens 4 mittels eines oder mehrerer definiert längsdeformierbarer, z. B. seilförmiger Halterungsteile 6 am formstabilen Heckende 5 zu befestigen, wie dies im dargestellten Ausführungsbeispiel angedeutet ist. Eine derartige Halterung der heckseitigen großen Masse führt zu einer weiteren Entlastung der Deformationsglieder 12 des Vorderwagens.

Die längsnachgiebige Lagerung der heckseitigen großen Masse kann in einfacher Weise zur weiteren Verbesserung des Fahrzeuginsassenschutzes ausgenutzt werden, indem nämlich die bei einem Frontalzusammenstoß auftretende Längsverschiebung der großen Masse relativ zum formstabilen mittleren Farzeugbereich 1 mit Hilfe vorzugsweise seilförmiger Kraftübertragungsglieder 9, 10 dazu verwendet wird, die Sicherheitsgurte der Fahrzeuginsassen zu straffen und/oder die Lenksäule 8 vom Fahrzeugführer fortzuziehen, wie dies durch das serienmäßige Audi-Sicherheitssystem procon-ten für Fahrzeuge mit Frontantrieb an sich bekannt ist.

Dieser Gurtstraffeffekt und Lenksäulen-Wegzieheffekt tritt in vorteilhafter Weise nicht nur bei einem Frontalzusammenstoß, sondern auch bei einem den hinteren Fahrzeugbereich 3 verformenden Heckaufprall ein.

Die Erfindung wurde anhand eines Fahrzeugs erläutert, bei dem im Hinterwagen ein Batteriekasten großer Masse angeordnet ist. Die Erfindung ist nicht auf ein derartiges Fahrzeug beschränkt. Sie ist in entsprechender Weise auch bei allen anderen Fahrzeugen anwendbar, bei denen im Heckbereich eine konzentrierte große Masse angeordnet ist, beispielsweise bei Fahrzeugen mit einem Heckmotorantrieb.

## Patentansprüche

1. Kraftfahrzeug, insbesondere Personenkraftwagen, mit einem den Fahrgastraum umfassenden deformationsstabilen mittleren Fahrzeugbereich (1), mit je einem definiert längsdeformierbaren vorderen und hinteren Fahrzeugbereich (2, 3), sowie mit einer im hinteren Fahrzeugbereich (3) konzentrierten großen Masse (4), wie z. B. einem Antriebsaggregat eines heckgetriebenen Fahrzeugs oder einem Batterieblock eines zumindest zeitweise elektromotorisch betriebenen Fahrzeugs,
**dadurch gekennzeichnet,**
daß die große Masse (4) einerseits am im wesentlichen formstabilen Heckende (5) des hinteren Fahrzeugbereichs (3) oder Teilen davon befestigt und andererseits relativ zu den übrigen Teilen des Fahrzeugs in Fahrzeuglängsrichtung nachgiebig gelagert ist.

2. Kraftfahrzeug nach Anspruch 1,
**dadurch gekennzeichnet,**
daß die große Masse (4) zumindest annähernd starr am Heckende (5) oder Teilen davon befestigt ist.

3. Kraftfahrzeug nach Anspruch 1,
**dadurch gekennzeichnet,**
daß die große Masse (4) mittels eines definiert langsdeformierbaren Halterungsteils (6), vorzugsweise eines Seils o. ä. am formstabilen Heckende (5) oder Teilen davon befestigt ist.

4. Kraftfahrzeug nach einem der Ansprüche 1-3,
**gekennzeichnet,**
durch einerseits an der längsnachgiebig gelagerten großen Masse (4) und andererseits an einer Gurtstraffeinrichtung (7) und/oder an der Lenksäule (8) des Fallrzeugs angelenkte, vorzugsweise seilförmige Kraftübertragungsglieder (9, 10), durch welche die bei einem Frontalcrash auftretende Längsverschiebung der großen Masse (4) relativ zum formstabilen mittleren Fahrzeugbereich (1) in eine gurtstraffende und/oder in eine die Lenksäule (8) vom Fahrzeugführer fortziehende Bewegung umgewandelt wird.
